# EUROPÄISCHE PATENTSCHRIFT

(11) **EP 2 214 945 B1**
(45) Veröffentlichungstag und Bekanntmachung des Hinweises auf die Patenterteilung: **07.09.2011**
(21) Anmeldenummer: 07847651.2
(22) Anmeldetag: 03.12.2007
(51) Int. Cl.: B60W 30/18, B60W 10/18, B60W 10/20

(54) **BEHINDERTENGERECHTES FAHRZEUG**
VEHICLE ADAPTED FOR DISABLED PEOPLE
VEHICULE ADAPTE AUX PERSONNES HANDICAPEES

(43) Veröffentlichungstag der Anmeldung: 11.08.2010
(73) Patentinhaber: Bozzio AG, 2502 Biel (CH)
(72) Erfinder: ROHNER, Linus, "verstorben" (CH); ANDRES, Christian, CH-3294 Büren A. A. (CH); GERSTER, Bernhard, CH-2554 Meinisberg (CH); AEBERHARD, Hannes, CH-2552 Orpund (CH); SCHUETZ, Daniel, CH-2560 Nidau (CH)
(74) Vertreter: P&TS Patents & Technology Surveys SA
(86) Internationale Anmeldenummer: PCT/EP2007/063140
(87) Internationale Veröffentlichungsnummer: WO 2009/071113

(56) Entgegenhaltungen:
- DE-A1-102004 028 938
- US-A1- 2002 046 895
- US-A1- 2004 140 145

## Beschreibung

### Technisches Gebiet

Die Erfindung bezieht sich auf ein Fahrzeug mit einer Steuerung entsprechend dem unabhängigen Anspruch. Spezifisch bezieht es sich auf ein behindertengerechtes Auto, das mit einem Lenk- und Bremseingabemodul ausgestattet ist, an welche verschiedene austauschbare Bedienelemente zum Lenken und Bremsen entsprechend dem Wunsch und dem Bedürfnis des Benutzers anbringbar sind. Die Erfindung bezieht sich auch auf ein Verfahren zur Ausrüstung eines Fahrzeugs mit einem Steuerungssystem.

### Stand der Technik

Aus dem Stand der Technik sind eine Vielzahl von Eingabegeräten für rein elektrische Lenksysteme bekannt.

Insbesondere sind Lenksysteme bekannt, welche dem Fahrer eines Fahrzeuges Rückmeidungen über die Lenkkraft oder die Radposition geben. Dafür wurden so genannte Force-Feedback-Systeme entwickelt, welche diese Aufgabe erfüllen. Als Rückmeldegrösse kann entweder die effektiv am Lenkgetriebe erzeugte Lenkkraft, oder der effektive Radeinschlagswinkel verwendet werden. Die Rückmeldung kann insbesondere elektronische, mechanisch oder hydraulisch erfolgen. Force Feedback wird neben dem Einsatz in Fahrzeugen auch bei Simulatoren oder Computerspielen eingesetzt. Die wichtigste Aufgabe der Force-Feedback-Systeme für bodengebundene Kraftfahrzeug ist es, den Fahrer über den Strassenzustand, die Fahrzeugquerbeschleunigung und die Haftungsreserve der Räder zu informieren. Für die Anwendung in Fahrzeugen für körperbehinderte Menschen wird typischerweise ein so genannter Joystick oder Sidestick zur Eingabe eines Lenksignals verwendet.

Ein solches System ist beispielsweise aus EP 1 595 766 bekannt. Dabei wird ein Fahrzeug aufgrund der Betätigung eines Joysticks gelenkt. Über ein Reduktionsgetriebe wird das Lenksignal einem Potentiometer zugeführt, welches dann einen elektrischen Motor steuert. Dieser Motor ist über ein Getriebe mit der Lenksäule verbunden. Über mechanische Elemente wird die Drehbewegung in eine lineare Bewegung konvertiert. Die lineare Bewegung wird dann über Kabelstränge dem Joystick mechanisch zugeführt, so dass der Benutzer eine Rückmeldung der Bewegung erfährt. Nachteilig bei diesem System ist jedoch, dass es nicht auf den Benutzer einstellbar ist.

GB2314607 offenbart ein weiteres Lenksystem mit einem Joystick. Der Joystick kann in der Fahrzeug-Querachse bewegt werden. Über ein Fusspedal und einen Schwenkhebel kann das Fahrzeug beschleunigt oder verzögert werden. Ein am Joystick angebrachter Aktuator kann eine Reaktionskraft auf den Joystick ausüben. Nachteilig bei diesem System ist, dass der Fahrer das Fahrzeug mit den Händen und auch mit den Beinen steuern muss. Zudem kann der Joystick unbeabsichtigt betätigt werden, was sich negativ auf die Fahrsicherheit auswirkt.

WO200512092 offenbart einen weiteren Joystick. Um eine Lenkbewegung auszuführen, kann der Joystick kreisförmig in einer Führung betätigt werden. Es ist ein Nachteil dieses Joysticks, dass der Benutzer den ganzen Arm bewegen muss, was insbesondere bei langen Fahrten Ermüdungserscheinungen beim Fahrer hervorruft.

Bei so genannten Vierwege-Joysticks ist die Handhabung für den Benutzer zudem sehr schwierig zu erlernen. Denn der Joystick muss nach vorne gedrückt werden, um das Fahrzeug zu beschleunigen und zudem muss der Joystick bei einer Kurvenfahrt noch nach rechts oder links bewegt werden. Dies ein Nachteil, denn es ist aufgrund unkontrollierter Bewegungen leicht möglich, mit einem Joystick dieser Art die Kontrolle über das Fahrzeug zu verlieren

Ein weiteres Problem mit Eingabegeräten des Standes der Technik ergibt sich aus den mechanischen Gegebenheiten, welche meist eine grosse Baugrösse erfordern.

Nachteilig bei den bekannt gewordenen Eingabehilfen ist zusätzlich, dass der Benutzer auf das vorgeschlagene Lenksystem, den eingebauten Joystick, etc. beschränkt ist. Aus diesem Grunde schlägt beispielsweise US2004 140145, die auch den nächstliegenden Stand der Technik nach der Präambel der Anspruchs 1 darstellt, eine gemeinsame Elektronik vor, an die verschiedene Lenksysteme angeschlossen werden können. Damit ist zwar die Modularität des Systems gegeben. Der Benutzer kann also aus einer Vielzahl von Lenksystemen das ihm am bequemsten scheinende auswählen und in sein Fahrzeug einbauen lassen. In diesem System wird jedoch die gesamte Einheit des Steuerungssystems ausgetauscht. Dies ist verhältnismässig aufwendig. Wenn sich der Benutzer also für ein anderes System entscheidet, gibt es keine einfache Möglichkeit, von einem Joystick auf ein Schieberegler oder ein Steuerrad umzuwechseln. Unter Umständen muss sogar der gesamte Sitz ausgetauscht werden. Lenkung und Bremsen können in diesem modularen System zusätzlich nur kombiniert ausgetauscht werden, was einen weiteren Nachteil in sich trägt. Der Benutzer, der zwar noch Lenken, aber nicht mehr bremsen kann (beispielsweise durch Behinderung der Beine), kann nur das Komplettsystem wählen, nicht nur ein Modul für die Bremse. Dadurch wird das System insgesamt teurer, aufwendiger und weniger attraktiver für Behinderte.

### Darstellung der Erfindung

Ausgehend von diesem Stand der Technik liegt der Erfindung die Aufgabe zugrunde, ein System anzubieten, welches einfacher als die bekannten Lenksysteme an die Bedürfnisse des Benutzers anpassbar ist.

Es ist ein anderes Ziel, ein System anzubieten, welches nachträglich in ein Fahrzeug eingebaut werden kann. Dies soll auch für nur eine der Primärfunktion lenken und Bremsen gelten.

Es ist ein anderes Ziel der Erfindung, ein Steuersystem eines Fahrzeugs zu schaffen, welches die Primärfunktion (Lenken, Bremsen) bei Ausfall von sicherheitskritischen Komponenten in jedem Fall gewährleistet.

Es ist ein anderes Ziel der Erfindung, ein Eingabegerät bereitzustellen, welches mit variablem Kraftaufwand einfach und sicher bedienbar ist.

Diese Aufgabe wird durch ein Fahrzeug mit einer erfindungsgemässen Steuerung entsprechend den Merkmalen des unabhängigen Patentanspruchs gelöst. Vorteilhafte Ausgestaltungen der Erfindung sind in den abhängigen Ansprüchen angegeben.

Erfindungsgemäss wird dieses Ziel bei einem Fahrzeug mit einer Steuerung, das gekennzeichnet ist, durch
o ein Lenkeingabemodul mit einer mechanischen Schnittstelle, an die verschiedene austauschbare Bedienelemente zum Lenken des Fahrzeugs anbringbar sind, und mit mindestens einem Sensor, um die Bewegung des Bedienelements aufzunehmen, wobei das Lenkeingabemodul mit mindestens einem Lenkaktuator zur Ausführung des Lenkwunsches am Fahrzeug; und/oder
o ein Bremseingabemodul bestehend aus einer mechanischen Schnittstelle mit berührungslosen Sensoren, an die verschiedenen austauschbare Bedienelemente zum Bremsen anbringbar sind und mindestens einem Bremsaktuator zur Ausführung des Bremswunsches am Fahrzeug; und
o pro Lenkeingabemodul und/oder Bremseingabemodul mindestens ein Hauptkontroller vorhanden ist, um die Einstellung der individuellen Parameter betreffend Lenkwinkel und Geradeausstellung in Bezug auf ein bestimmtes der austauschbaren Bedienelemente zum Lenken des Fahrzeugs und/oder um die Einstellung der individuellen Parameter betreffend Bremsweg in Bezug auf ein bestimmtes der austauschbaren Bedienelemente zum Bremsen vorzunehmen.

Die Erfindung bezieht sich auch auf ein Verfahren zur nachträglichen Ausrüstung eines Fahrzeugs mit dem erfindungsgemässen modularen Steuerungssystem.

Die Erfindung bezieht sich zusätzlich auf ein Verfahren zur Konfigurierung eines erfindungsgemässen Fahrzeugs, wobei der oder die Hauptkontroller über eine Schnittstelle mit einem externen Computer verbunden und konfiguriert werden, um die Einstellung der individuellen Parameter betreffend Lenkwinkel und Geradeausstellung in Bezug auf ein bestimmtes der verschiedenen austauschbaren Bedienelemente zum Lenken des Fahrzeugs und/oder um die Einstellung der individuellen Parameter betreffend Bremsweg auf ein bestimmtes der austauschbaren Bedienelemente zum Bremsen vorzunehmen.

Die Erfindung bezieht sich ebenfalls auf Computerprogrammprodukt mit einem Softwarecode, der geeignet ist, auf einem Computer abzulaufen, um das erfindungsgemässe Verfahren zur Konfigurierung eines erfindungsgemässen Fahrzeugs durchzuführen.

Vorteilhaft ist es bei dem vorgeschlagenen System, dass an ein und derselben mechanischen Schnittstelle sowohl in Bezug auf das Eingabesystem Lenken als auch auf das Eingabesystem Bremsen unterschiedliche Bedienelemente anbringbar sind, ohne dass das sicherheitskritische elektrische und elektronische System geändert werden muss. Das System lässt es zu, dass benutzer- und bedienelementabhängige Fahrparameter wie linker und rechter Lenkanschlag, Geradeausstellung und Force-Feedback einstellbar sind.

Das erfindungsgemässe Steuerungssystem zeichnet sich zusätzlich dadurch aus, dass zwischen dem Lenk- und Bremseingabemodul und dem Lenk- und Bremsaktuator einschliesslich den dazwischenlegenden Umrichtermodulen nur eine elektrische oder elektronische, aber keine mechanische Verbindung vorhanden ist. Die Steuersignale zum Lenken und Bremsen müssen also alle elektronische umgesetzt werden, bevor eine Ausführung an den Aktuatoren und dem Fahrzeug geschieht.

Das Gesamtsteuersystem verfügt vorteilhaft über eine so genannte heisse Redundanz, so dass mindestens zwei Systeme/Stränge für Lenken und mindestens zwei Systeme/Stränge für Bremsen immer gleichzeitig aktiv sind. Beim Ausfall eines Systems ist das andere für die Erhaltung der Grundfunktion zuständig. Das Gesamtsteuersystem erkennt über 99% aller Fehler und führt in diesem Fall das Fahrzeug in den sicheren Zustand. Als sicherer Zustand gilt bei den Primärfunktionen Lenken und Bremsen der Erhalt der Funktionalität. Das Gesamtsteuersystem beinhaltet eine Architektur, welche über einen gemeinsamen Kommunikationsbus alle Fehler der Subsysteme dem Gesamtsystem mitteilt. Das Gesamtsteuersystem beinhaltet eine Architektur, welche eine diskrete Verkabelung von den austauschbaren Bedienelementen zu den Aktuatoren in den Subsystemen beinhalten kann. Die Modularität bleibt also auch hier erhalten.

Weitere vorteilhafte Ausführungsformen sind in den Unteransprüchen angegeben.

### Kurze Beschreibung der Figuren

Die Erfindung wird anhand der beigefügten Figuren näher erläutert, wobei zeigen
- Fig. 1: eine Gesamtansicht des erfindungsgemässen Systems;
- Fig. 2a-e: ein Lenkeingabemodul (Fig. 2a) und verschiedene Bedienelemente des Lenksystems (Fig. 2b-e), die von den Benutzern verwendet werden können;
- Fig. 3a-c: ein Bremseingabemodul mit berührungslosen Sensoren (Fig. 3a), ein Bremsschieber (Fig. 3b) und eine Wippe (Fig. 3c);
- Fig. 4: eine Ansicht des Sekundarmoduls mit Touchpanels oder Tastern und
- Fig. 5: eine Gesamtansicht einer erfindungsgemässen Steuerung in einem Fahrzeug.

### Wege zur Ausführung der Erfindung

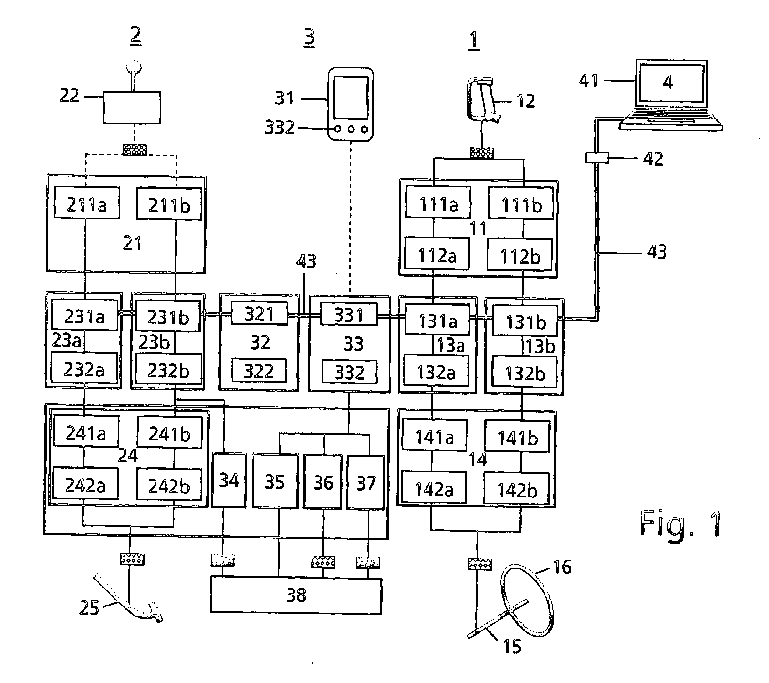

Menschen, welchen die Bedienung eines Strassenfahrzeugs mittels eines Lenkrads und Pedalen nicht möglich ist, gibt das erfindungsgemässe Steuerungssystem die Möglichkeit, das erfindungsgemässe Fahrzeug über ein austauschbares Benutzerinterface zu lenken. Das erfindungsgemässe System ist modular aufgebaut und umfasst verschiedene Module, die im Einzelnen erläutert werden. Ausgegangen wird von einem PKW, der normal mit Lenkrad und Lenksäule und einem Gas- und Bremspedal ausgestattet ist. Im Rahmen der Erfindung ist eine Lenksäule und ein Gas- und Bremspedal nicht unbedingt erforderlich. Die einzelnen Module, die nachträglich und einzeln in das Fahrzeug oder den PWK eingebaut werden können, werden in Bezug auf die Fig. 1 näher erläutert.

### Lenksystem 1

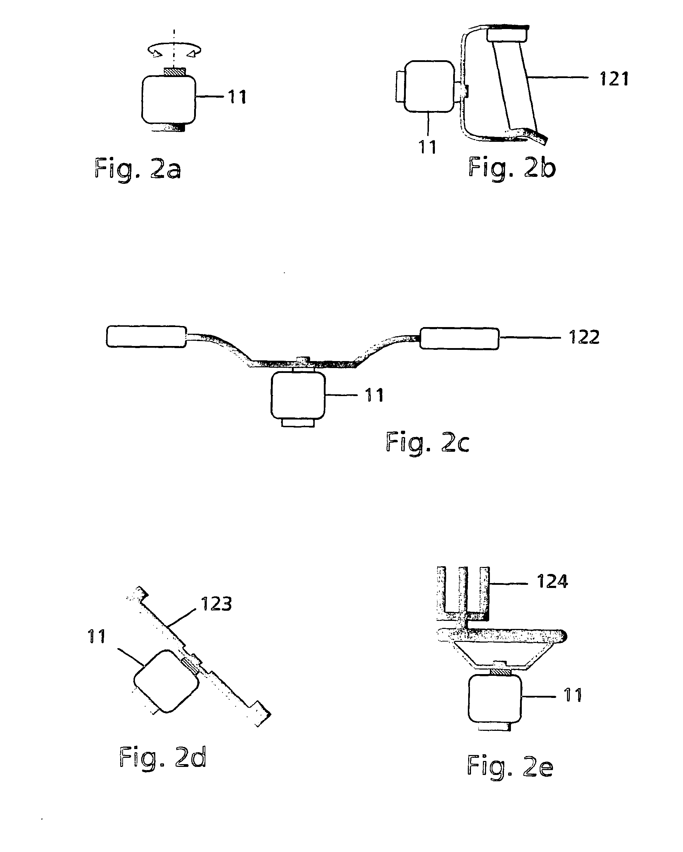

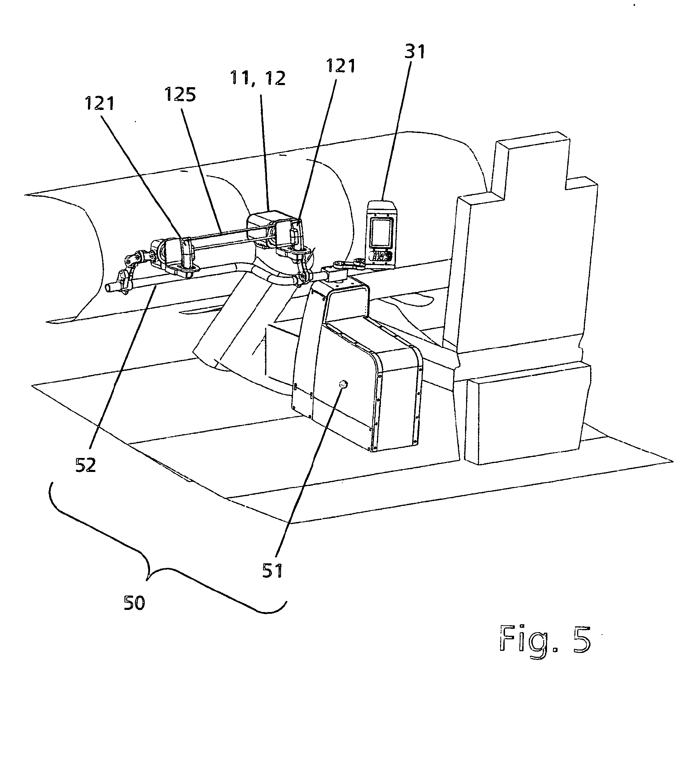

Ein Lenkeingabemodul 11 ist mit einer mechanischen Schnittstelle ausgestattet, an die verschiedene austauschbare Bedienelemente 12 zum Lenken des Fahrzeugs anbringbar sind. Wie in den Fig. 2a-e sichtbar ist, sind im Rahmen der Erfindung als austauschbare Bedienelemente 12 zum Lenken des Fahrzeugs ein oder mehrere Joysticks 121 (Fig. 2b), einem Fingerjoystick, einem Motorrad- oder Zweiradlenker 122 (Fig. 2c), eine Fussplatte 123 (Fig. 2d), ein Minilenkrad 124 (Fig. 2e) oder eine Kniehebellenkung denkbar. Ist ein Joystick 121 vorhanden, kann die Drehachse in der Mitte des Joysticks bzw. durch das Handgelenkzentrum in der Verlängerung des Arms liegen (vgl. Fig. 2b). Dies dient der einfacheren Handhabung. Ein Fingerjoystick weist die Drehachse unterhalb der Handauflage auf. Weitere Bedienelemente 12 sind grundsätzlich denkbar. In einer weiteren Ausführungsform sind zwei Joysticks 121 vorhanden, wobei ein erster Joystick 121 mit dem Lenkeingabemodul 11 über die erwähnte mechanische Schnittstelle vorhanden ist und der andere mit dem ersten Joystick über ein Gestänge 125 verbunden ist (vgl. Fig. 5). Der Weg eines einzelnen Bedienelements 12 zur oder bei der Steuerung des Fahrzeugs ist jeweils unterschiedlich. Ein Minilenkrad 124 kann in mehrere Umdrehungen pro Richtung gedreht werden, der Joystick nur ein Paar Grad, etc. Grundsätzlich ist es denkbar, dass die Bedienelemente 12 mit den rechten, dem linken oder mit beiden Armen/Händen bedient werden können.

Die Bewegung des austauschbaren Bedienelements 12 wird mit mindestens einem Sensor 111a,b aufgenommen, der das Signal an einen Aktor 112 weitergibt. Der Sensor 111a,b und der Aktor 112a,b sind im Lenkeingabemodul 11 vorhanden. Das Lenksystem 1 verfügt vorteilhaft sowohl über eine redundante Sensorik zur relativen inkrementellen Positionserfassung als auch über eine redundante Sensorik zur absoluten Positionserfassung.

Lenkt der Benutzer das Fahrzeug, wirkt eine Kraft auf die Bedienelemente 12 und diese weichen von einer Sollposition ab. Zwischen dem Lenkeingabemodul 11 und einem Ausgabemodul 14 mit einem Lenkaktuator 142a,b ist ein Umrichtermodul 13a,b vorhanden, welches ein Hauptkontrollerboard 131a,b und einen Umrichter 132a,b enthält. Die Abweichung der Bedienelemente 12 von der Sollposition wird an das Hauptkontrollerboard 131 a,b weitergegeben und dieses generiert daraus eine Drehmomentvorgabe für (Lenk-)Aktuatoren 142a,b an der Lenksäule 15. Zur Regelung des Drehmoments wird das Drehmoment durch zusätzliche Sensoren 141a,b erfasst und mit der Vorgabe abgeglichen.

Das Lenkeingabemodul 11 wirkt auf eine bestehende Lenksäule 15 und wird direkt hinter dem Lenkrad 16 eingebaut. Dies ist insbesondere vorteilhaft, wenn das Fahrzeug mit den bestehenden Pedalen und dem Lenkrad weiterhin bedient werden können soll. Es ist aber für die Erfindung nicht unbedingt notwendig. Vielmehr können die Aktuatoren 142a,b des Lenksystems 1 direkt auf den Lenkmechanismus einwirken.

Die Sensorik und die Aktorik, welche für das Lenken zuständig ist, werden aus Sicherheitsgründen redundant geführt. Im gegebenen Ausführungsbeispiel wird diese zweistrangig geführt (Strang mit den Elementen 111a, 112a, 131a, 132a, 141a, 142a und Strang mit den Elementen 111 b, 112b, 131 b, 132b, 141 b, 142b), die Anzahl der Stränge wird aber vom Einzelfall abhängen. Es werden pro Strang dabei vorteilhaft jeweils zwei Sensoren 111a und zwei Sensoren 111b vorhanden sein. Im Fehlerfall ist somit immer mindestens ein Lenkmotor / Lenkaktuator 142a,b in der Lage, ein Lenkmoment zu erzeugen, welches dem Lenkwunsch des Fahrers entspricht. Der fehlerhafte Strang muss dabei in der Lage sein, den Fehler zu erkennen und sich selbst abzuschalten. Die Umrichtermodule 13a,b verfügen damit über eine Eigendiagnose. Das oder die Umrichtermodule 13a,b befinden sich im Fahrzeugsinneren nahe dem Lenkeingabemodul 11.

Ein Force-Feedback-System überträgt die Kraft der Räder zurück zum austauschbaren Bedienelement 12. Die Aktorik, welche für das Feedback zuständig ist, wird nicht redundant ausgeführt. Es muss jedoch dafür gesorgt werden, dass im Fehlerfall reagiert, d.h. ausgeschaltet wird. Das Feedback erfolgt im Lenkeingabemodul 11 durch eine Bremse in der Form eines Anschlags und aktiv durch einen Motor. Bremse und Motor werden je von einem Kanal, basierend auf den für die Lenkfunktion benötigten Messgrössen angesteuert. Dem Motor wird proportional zur Abweichung der Bedienelemente 12 von Sollwert ein Drehmoment vorgegeben. Im Lenkeingabemodul 11 wirkt die Bremse als Anschlag, wenn die maximale Soll-/Ist-Abweichung erreicht wird. Das Lenksystem 1 verfügt zusätzlich über eine Übersteuerungsrückmeldung-mittels alternierender haptischer Signale.

Um den begrenzten Weg an den Bedienelementen 12 optimal nutzen zu können, ist die Wegübersetzung von dem Bedienelement 12 zur Lenksäule 15 geschwindigkeitsabhängig. Zu diesem Zweck werden zwei oder mehrere zusätzliche Geschwindigkeitssensoren ins Fahrzeug eingebaut, welche in der Lage sind, die Fahrzeuggeschwindigkeit redundant zu messen. Die Geschwindigkeit des Fahrzeugs kann durch Drehzahlsensoren an einer Antriebswelle erfasst werden.

### Bremssystem 2

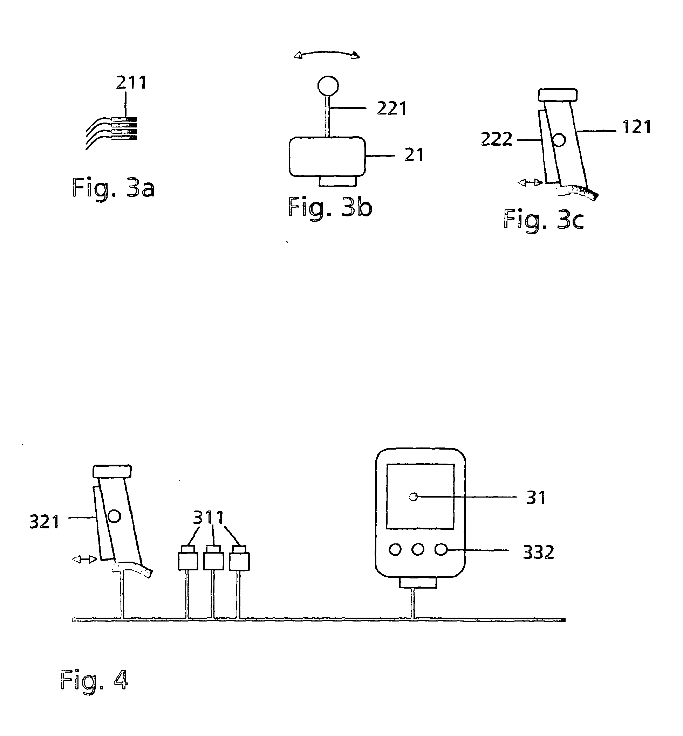

Das Bremseingabemodul 21 bestehend aus einer mechanischen Schnittstelle mit einem oder mehreren berührungslosen Sensoren 211a,b, an die austauschbare Bedienelemente 22 zum Bremsen und zum Gasgeben anbringbar sind. Als austauschbare Bedienelemente 22 zum Bremsen und Gasgeben können ein Gas/Bremsschieber 221 (Fig. 3b) oder ein Kipphebel/Wippe 222 (Fig. 3c) oder ein Daumenknopf vorhanden sein. Andere geeignete Bedienelemente 22 sind im Rahmen der Erfindung denkbar. Das Bedienelement 22 kann über einen oder mehrere Druckpunkte für Gas/Bremse verfügen, was einen fliessenden Übergang und eine angenehmere Bedienung für den Benutzer ermöglicht.

Das Bremseingabemodul 21 kann auf ein vorhandenes Bremspedal 25 über mindestens einen Bremsaktuator 242a,b eines Ausgabemoduls 24 wirken. Im Bremseingabemodul 21 wird der Bremswunsch des Benutzers erfasst. Durch Ausüben einer Kraft wird über die Bremsaktuatoren 242a,b des Ausgabemoduls 24 ein Bremsdruck erzeugt, welcher dem Bremswunsch entspricht. Zur Regelung des Bremsdrucks wird der Druck in den hydraulischen Leitungen der Bremsanlage durch zusätzliche Sensoren 241a,b erfasst. Es ist natürlich möglich, dass der Aktuator 242a,b eine Kraft nicht auf das Bremspedal ausübt, sondern auf andere Weise beispielsweise direkt auf die Bremsscheibe, etc.

Zwischen dem Bremseingabemodul 21 mit der mechanischen Schnittstelle und dem Ausgabemodul 24 mit den Sensoren 241 a,b und dem Bremsaktuator 242a,b ist ein Umrichtermodul 23a,b vorhanden, welches ein Hauptkontrollerboard 231a,b und einen Umrichter 232a,b enthält. Das Umrichtermodul 23a,b erfüllt mit dem Umrichter 232a,b eine Drehmomentenregelung eines Aktuators 242a,b.

Die Sensorik und die Aktorik, welche für das Bremsen zuständig ist, werden aus Sicherheitsgründen ebenfalls redundant geführt. Im gegebenen Ausführungsbeispiel wird diese zweistrangig geführt (ein Strang mit den Elementen 211a, 231a, 232a, 241a, 242a und ein Strang mit den Elementen 211b, 231 b, 232b, 241 b, 242b), die Anzahl der Stränge wird aber vom Einzelfall abhängen. Es werden pro Strang a/b dabei vorteilhaft jeweils zwei Sensoren 211 a und zwei Sensoren 211 b vorhanden sein. Der fehlerhafte Strang muss dabei in der Lage sein, den Fehler zu erkennen und sich selbst abzuschalten. Im Fehlerfall ist somit immer mindestens ein Bremsaktuator 242a,b in der Lage ein Bremsmoment zu erzeugen, welches dem Bremswunsch des Fahrers entspricht. Das oder die Umrichtermodule 23a,b befinden sich im Fahrzeugsinneren nahe dem Bremseingabemodul 21.

Eine Ausnahme bilden die Drucksensoren in den hydraulischen Leitungen der Bremsanlage. Diese sind nur einfach ausgeführt. Bei fehlerhaften Bremsdrucksensoren 241a,b wird anstelle der Regelung des Bremsdrucks auf die Steuerung der Drehmomente der Bremsmotoren und somit der Kraft am Bremspedal 25 gewechselt.

Die Bremsdruckregelung kann ebenfalls geschwindigkeitsabhängig erfolgen, um die Dosierbarkeit der Bremse bei tiefer Fahrzeuggeschwindigkeit zu verbessern. Zu diesem Zweck werden die oben für das Lenkmodul erwähnten Geschwindigkeitssensoren ins Fahrzeug eingebaut, welche in der Lage sind, die Fahrzeuggeschwindigkeit redundant zu messen.

Das Bremssystem 2 wird über eine Kraftrückmeldung verfügen, die es dem Benutzer ermöglich, die Bremskraft zu spüren.

Das Lenk- und das Bremseingabemodul 11, 21 können in unterschiedliche mechanische Module eingebauten werden. In einer besonderen Ausführungsform befindet sich beide Module-Lenk- und Bremseingabemodul 11, 21 - jedoch in einem einzigen Modul. Es ist dabei denkbar, den erwähnten Kipphebel/die Wippe 222, der zum Bremsen/Gasgeben verwendet wird, benutzerfreundlich in einen Joystick 121 zu integrieren. Die berührungslosen Sensoren 211a,b erfassen die Position des Kipphebels und geben diesen an die erwähnten Bremsaktuatoren 241 a,b weiter. Wenn es sich um das oben erwähnte Ausführungsbeispiel mit zwei Joysticks 221 handelt, wird der eine Joystick 221 mit dem Modul 11 mechanisch verbunden sein und der andere mit dem Kipphebel 222 ausgestattet sein. Der zweite Joystick ist lediglich mit dem ersten Joystick über das Gestänge 125 verbunden (vgl. Fig. 5). In diesem zweiten Joystick kann jedoch ein Schalter zur Ausübung der Sekundärfunktionen enthalten sein.

### Modul 3 für Sekundärfunktionen 38

Das Modul 3 für Sekundärfunktionen 38 umfasst Funktionen wie Licht, Scheibenwischer, Blinker, Gas 34, Handbremse 35, Schaltung 36, Automatikgetriebe, Zündung, Anlasser, andere Eingänge/Ausgänge 37, etc. Das Modul 3 für Sekundärfunktionen 3 kann aus einem Touchscreen 31 bestehen. Für Personen, die den Touchscreen 31 nicht bedienen können, steht eine Schnittstelle über einen oder mehrere Taster 311 zur Verfügung (Fig. 4). Dort können entweder drei Taster 311 oder der erwähnte Kipphebel/Wippe 312 angeschlossen werden. Wie weiter oben erwähnt, kann der Kipphebel 312 in einem zweiten Joystick 221 eingebaut sein, welcher über ein Gestänge 125 mit dem ersten Joystick 221 verbunden ist. Mit Hilfe der Taster 311 oder 312 kann man alle Funktionen auf dem Touchscreen bedienen, im Sinne der Funktionen *hoch scrollen, herunter scrollen, auswählen*. Das Display befindet sich im Sichtfeld des Fahrers. Andere Arten der Eingabe für die Sekundärfunktionen sind denkbar, so zum Beispiel Wippen, frei positionierbare Schalter, etc.

Das Modul 3 für die Sekundärfunktionen 38 umfasst das Alarmmodul 33. Das Alarmmodul 33 besteht aus einem Hauptkontrollerboard 331 und einer Anzeige 332. Die Anzeige 332 kann in das Touchpanel integriert sein und optische und/oder akustische Signale abgeben (vgl. Fig. 1 oder 4). Die Anzeige zeigt jeden Ausfall detailliert mit einem Fehlerbeschrieb an. Im Falle des eigenen Ausfalls führt dies zu einer Eigenfehleranzeige. Die Anzeige weist eine graphische Darstellung der Navigation und der Bedienung der Sekundärfunktionen auf.

### Energiemodul 32

Das Energiemodul 32 umfasst ein Hauptkontrollerboard 321 und eine zusätzliche Batterie 322. Die Energieversorgung basiert auf dem Bordnetz des Fahrzeugs. Der Alternator stellt bei laufendem Motor die Versorgung des Fahrzeugs und der Lenkung durch die genannten Module sicher. Bei Ausfall des Fahrzeugsbordnetzes wird die Energieversorgung durch die zusätzliche Batterie 322, eine so genannte Backup-Batterie, sichergestellt. Dies kann bis zum Anhalten des Fahrzeugs geschehen. Um die Energieversorgung fehlertolerant zu gestalten, wird sie in zwei System getrennt. Das Energiemodul 32 überwacht Primär- (Fahrzeugbordnetz) und Sekundärenergie (Backupbatterie 322). Zwischen dem Fahrzeugnetz und dem Backupnetz befindet sich eine Diode. Sie verhindert den Stromfluss vom Backupnetz zum Fahrzeugnetz, was zu einem Entladen der Backupbatterie führen könnte. Eine Sicherung in der Verbindung zwischen Fahrzeugbordnetz und Backupnetz verhindert eine negative Beeinflussung des Fahrzeugbordnetzes bei einem Kurzschluss im Backup-Netz. Der Ladezustand der Backup-Batterie 322 wird bei jedem Systemstart durch das Energiemodul 32 ermittelt, um sicherzustellen, dass die Backupbatterie 322 bei Bedarf verwendet werden kann. Dies kann beispielsweise mittels einem Pulstest geschehen. Die Backup-Batterie befindet sich im Fahrzeugsinneren nahe dem Lenkeingabemodul 11.

### Hauptkontrollerboards 131a,b, 231a,b, 321, 331

Die Hauptkontrollerboards 131a,b, 231a,b, 321, 331 sind über den gemeinsamen Bus 43 für einen vertikalen Informationsaustausch untereinander verbunden. Das Gesamtsteuersystem beinhaltet eine Architektur, welche über den Kommunikationsbus 43 alle Fehler der Subsysteme (Lenk- und Bremssystem 1, 2, Modul 3 für Sekundärfunktion 38 inkl. Energiemodul 32 und Alarmmodul 33) dem Gesamtsystem mitteilt.

Alle erwähnten Hauptkontrollerboards 131 a,b, 231 a,b, 231, 321, 331 sind identisch in den verschiedenen Modulen einsetzbar. Die Hauptkontrollerboards bestehen aus einem zertifizierten Hauptkontroller, einem Watchdogkontroller zur Überwachung des Hauptkontrollers, einem EEPROM, Eingängen für einen Inkrementaldecoder und aus einem Unterspannungsabschaltest. Diese Hauptkontrollerboards 131a,b, 231a,b, 321, 331 sind frei programmierbar und verfügen über sicherheitstaugliche Schnittstellen.

Die Hauptkontrollerboards 131a,b, 231a,b, 321, 331 überführen im Fehlerfall einer sicherheitskritischen Primärfunktionen wie Bremsen, Lenken das Fahrzeug in einen sicheren Zustand, wobei alle Fehler mit mehr als 99% Wahrscheinlichkeit erkannt werden. Als statistisch relevante Fehler eines Motors können beispielsweise Wickelkurzschluss, Windungskurzschluss oder Fehler in der Hallsensorik, etc. auftreten. Diese Fehler über den Zustand des Motors werden von den Hauptkontrollerboards 131a,b, 231a,b, 321, 331 in Echtzeit beruhend auf dem Motorenmodell erkannt.

Die Software der Hauptkontrollerboards 131a,b, 231a,b, 321, 331 besteht aus einer Diagnosesoftware auf dem Hauptkontroller, einer Funktionssoftware und einer Watchdogsoftware auf dem Watchdogkontroller. Die Diagnosesoftware, die auf jedem Hauptkontrollerboard 131a,b, 231a,b, 321, 331 identisch vorhanden ist, ist für die Mikrokontrollerdiagnose zuständig. Die Funktionssoftware weist funktionsspezifische Eigenschaften und Parameter für Lenken, Bremsen Energie- und Informationsmanagement auf. Watchdogsoftware ist auf jedem Watchdogkontroller ebenfalls identisch vorhanden und somit modular. Die eingesetzte Software erkennt automatisch die Systemkonfiguration Bremse/Lenkung und die dazugehörigen Parameter.

Das Gesamtsteuersystem beinhaltet eine Architektur, welche eine diskrete Verkabelung von den austauschbare Bedienelementen 12, 22 zu den Subsystemen beinhalten kann. Die Verkabelung des Bremssystems und des Lenksystems ist aufteilbar, er kann nur als Brems- oder als Lenkstrang oder als gemeinsamer Brems- und als Lenkstrang ausgeführt werden. Die Modularität des erfindungsgemässen Steuerungssystems bleibt somit komplett erhalten. Das Gesamtkontrollsystem bzw. die Hauptkontrotterboards 131a,b, 231a,b, 321, 331 erkennen die Kabelstrangführung.

Das erfindungsgemässe Steuerungssystem zeichnet sich dadurch aus, dass zwischen dem Lenk- und Bremseingabemodul 11, 21 und dem Lenk- und Bremsaktuator 142a,b, 242a,b (einschliesslich den dazwischenlegenden Umrichtermodulen 13a,b, 23a,b) nur eine elektrische oder elektronische, aber keine mechanische Verbindung vorhanden ist. Es handelt sich also um ein Drive-by-Wire-System. Die Steuersignale zum Lenken und Bremsen müssen also alle elektronisch umgesetzt werden, bevor eine Ausführung an den Aktuatoren geschieht.

### Externe Konfiguration

Da verschiedene Bedienelemente vorhanden sein können, umfasst die vorliegende Erfindung mindestens einen externen PC 41 mit einer Servicesoftware 4. Die ermöglicht die Einstellung bzw. Konfigurierung der individuellen Parameter betreffend Lenkwinkel und Geradeausstellung in Bezug auf ein bestimmtes Bedienelement zum Lenken des Fahrzeugs, welches der Benutzer verwenden möchte, und die Einstellung der individuellen Parameter betreffend Bremsweg in Bezug auf ein bestimmtes austauschbares Bedienelement zum Bremsen, welches der Benutzer ebenfalls verwenden möchte. Zur Konfigurierung der Hauptkontrollerboards der Umrichtermodule 13, 23 sowie des Alarm- und des Energiemoduls 32, 33 sind diese über einen Servicestecker 42 und den Kommunikationsbus 43 mit dem externen Rechner oder Personalcomputer PC 41 verbindbar. Auf dem Personalcomputer 41 läuft der zur Konfigurierung geeignete Service-Manager.

Die Erfindung bezieht sich zusätzlich auf ein Verfahren zur Konfigurierung eines erfindungsgemässen Fahrzeugs, wobei der oder die Hauptkontroller 131a,b, 231a,b, 321, 331 mit dem externen Computer 41 verbunden und konfiguriert werden, um die Einstellung der individuellen Parameter betreffend Lenkwinkel und Geradeausstellung in Bezug auf ein bestimmtes der verschiedenen austauschbaren Bedienelemente 12 zum Lenken des Fahrzeugs und um die Einstellung der individuellen Parameter betreffend Bremsweg auf ein bestimmtes der austauschbaren Bedienelemente 22 zum Bremsen vorzunehmen. Auch die Einstellung der Force- Feedbackkraft ist möglich.

Die Erfindung bezieht sich ebenfalls auf Computerprogrammprodukt mit einem Softwarecode, der geeignet ist, auf einem Computer 41 abzulaufen, um das erfindungsgemässe Verfahren zur Konfigurierung durchzuführen.

Die Figur 5 zeigt eine Gesamtansicht einer erfindungsgemässen Steuerung in einem Fahrzeug mit einem Modulträger 50. Der Modulträger 50 besteht aus einem Baugruppenträger 51 (engl. rack) und mindestens einem Schwenkarm 52. Der Baugruppenträger 51 stellt eine gemeinsame Positionierung sowie eine Verpackung aller Elektronikmodule des Gesamtsystems und eine zentrale mechanische Anbindung an das Fahrzeug dar. Der Schwenkarm 52, der als Trägerelement zur Befestigung der Eingabemodule 11, 21 sowie der austauschbaren Bedieneinheiten 12, 22 dient, ist individuell auf die Bedürfnisse des Fahrers einstellbar. Der Schwenkarm 52 ist durch einfache Manipulation des Fahrers demontierbar, so dass das Fahrzeug mit oder ohne das erfindungsgemässe Gesamtsteuersystem fahrbar ist. Der Schwenkarm 52 schaltet das Gesamtsteuersystem automatisch ein, wenn er sich in Fahrerposition befindet.

Vorteilhaft in dem vorgeschlagenen System ist, dass an ein und derselben mechanischen Schnittstelle sowohl in Bezug auf das Eingabesystem Lenken als auch auf das Eingabesystem Bremsen unterschiedliche Bedienelemente anbringbar sind, ohne dass das sicherheitskritische elektrische/elektronische System geändert werden muss. Der Benutzer kann das für ihn bequemste oder am einfachsten zu bedienende Bedienelement auswählen und die Elektronik kann danach über die Servicesoftware konfiguriert werden. Das System lässt es zu, dass benutzer- und bedienelementabhängige Fahrparameter wie linker und rechter Lenkanschlag, Geradeausstellung und Force Feedback einstellbar sind.

Das vorgestellte Gesamtsteuersystem und die erwähnten Module dienen zum nachträglichen Einbau in Personenkraftfahrzeuge (PKW). Vorhandene Lenkanlagen (Lenksäule, Steuerrad) und Pedale (Gas, Bremse, Kupplung, Blinker, etc.) können bestehen bleiben, so dass das Fahren mittels des bestehenden Lenkrads und der Pedale weiterhin möglich ist. Es ist weiter im Rahmen der Erfindung möglich, dass nur das Lenksystem 1 oder nur das Bremssystem 2 verwendet und in das Fahrzeug eingebaut wird. Behinderte, die zwar noch Steuern aber nicht mehr bremsen können (oder umgekehrt), können so nur ein Modul (Lenksystem 1 oder Bremssystem 2) verwenden und zusätzlich ein bestehendes Bremspedal 25 oder ein vorhandenes Lenkrad 16 weiter nutzen. Da dass erfindungsgemässe System modular aufgebaut ist, bietet es die Möglichkeit, in zukünftigen Entwicklungsschritten um weitere Module ergänzt und erweitert zu werden, zum Beispiel bei weiter fortschreitender Behinderung mit einem Lenk- oder Bremssystem 1, 2 zusätzlich zum bestehenden System, etc..

Behinderte und nicht-behinderte Menschen können also das Auto nebeneinander nutzen, ohne dass Umbauten notwendig sind. Die Lenkung und das Bremsen sowie die Schalter zur Bedienung der Sekundärelemente sind so im Fahrzeug eingebaut, dass sie durch den Fahrer optimal bedient werden können. Die vorgeschlagene Lösung mit dem Schwenkarm 52 ermöglicht dieses auf einfache Weise.

### Bezugszeichenliste

- 1: Lenksystem
- 11: Lenkeingabemodul
- 111a,b: Sensor
- 112a,b: Aktor
- 12: Austauschbares Bedienelement
- 121: Joystick
- 122: Motorradlenker
- 123: Fussplatte
- 124: Minilenkrad
- 125: Gestänge
- 13a,b: Umrichtermodul
- 131a,b: Hauptkontrollerboard
- 132a,b: Umrichter
- 14: Ausgabemodul
- 141a,b: Sensor
- 142a,b: Aktor, Aktuator
- 15: Lenksäule
- 16: Steuerrad
- 2: Bremssystem
- 21: Lenkeingabemodul
- 211a,b: Berührungslosen Sensoren
- 22: Austauschbares Bedienelement
- 221: Schieber
- 222: Kipphebel/Wippe
- 23a,b: Umrichtermodul
- 231a,b: Hauptkontrollerboard
- 232a,b: Umrichter
- 24: Ausgabemodul
- 241a,b: Sensor
- 242a,b: Aktor, Aktuator
- 25: Bremspedal
- 3: Modul für Sekundärfunktionen
- 31: Touchpanel
- 311: Taster
- 312: Wippe für Sekundärfunktionen
- 32: Energiemodul
- 321: Hauptkontrollerboard
- 322: Zusätzliche Batterie
- 33: Alarmmodul
- 331: Hauptkontrollerboard
- 332: Anzeige
- 34: Gas
- 35: Handbremse
- 36: Schaltung
- 37: Andere Eingänge / Ausgänge
- 38: Sekundärfunktionen
- 4: Servicesoftware
- 41: externer Computer
- 42: Servicestecker
- 43: CAN-Bus, Kommunikationsbus
- 50: Modulträger
- 51: Baugruppenträger
- 52: Schwenkarm

## Patentansprüche

1. Fahrzeug mit einer Steuerung, aufweisend ein
o Lenkeingabemodul (11) mit einer mechanischen Schnittstelle, an die verschiedene austauschbare Bedienelemente (12) zum Lenken des Fahrzeugs anbringbar sind, und mit mindestens einem Sensor (111a,b), um die Bewegung des Bedienelements (12) aufzunehmen, wobei das Lenkeingabemodul (11) mit mindestens einem Lenkaktuator (142a,b) zur Ausführung des Lenkwunsches am Fahrzeug verbunden ist; und/oder ein
o Bremseingabemodul (21) bestehend aus einer mechanischen Schnittstelle mit berührungslosen Sensoren (211a,b), an die verschiedenen austauschbare Bedienelemente (22) zum Bremsen anbringbar sind und mindestens einem Bremsaktuator (242a,b) zur Ausführung des Bremswunsches am Fahrzeug; **dadurch gekennzeichnet, dass**
o pro Lenkeingabemodul (11) und/oder Bremseingabemodul (21) mindestens ein Hauptkontrollerboard (131a,b, 231a,b) vorhanden ist, um die Einstellung der individuellen Parameter betreffend Lenkwinkel und Geradeausstellung in Bezug auf ein bestimmtes der austauschbaren Bedienelemente (12) zum Lenken des Fahrzeugs und/oder um die Einstellung der individuellen Parameter betreffend Bremsweg in Bezug auf ein bestimmtes der austauschbaren Bedienelemente (22) zum Bremsen vorzunehmen.

2. Fahrzeug gemäss Anspruch 1, **dadurch gekennzeichnet, dass** als austauschbare Bedienelemente (12) zum Lenken des Fahrzeugs ein oder mehrere Joysticks (121), ein Motorradlenker (122), eine Fussplatte (123), ein Minilenkrad (124) oder eine Kniehebellenkung einsetzbar sind.

3. Fahrzeug gemäss einem der Ansprüche 1 oder 2, **dadurch gekennzeichnet, dass** ein Joystick (121) vorhanden ist und die Drehachse in der Mitte des Joysticks (121) liegt.

4. Fahrzeug gemäss einem der Ansprüche 1 bis 3, **dadurch gekennzeichnet, dass** als austauschbare Bedienelemente (12) zwei Joysticks (121) vorhanden sind, die über ein Gestänge (125) verbunden sind, wobei ein Joystick (121) mit dem Lenkeingabemodul (11) verbunden ist.

5. Fahrzeug gemäss einem der Ansprüche 1 bis 4, **dadurch gekennzeichnet, dass** als austauschbare Bedienelemente (22) zum Bremsen ein Gas/Bremsschieber (221) oder ein Kipphebel/Wippe (222) vorhanden ist.

6. Fahrzeug gemäss einem der Ansprüche 1 bis 5, **dadurch gekennzeichnet, dass** das Lenkeingabemodul (11) und das Bremseingabemodul (21) in einem einzigen Modul vorhanden sind.

7. Fahrzeug gemäss einem der Ansprüche 1 bis 6, **dadurch gekennzeichnet, dass** ein Modul (3) für Sekundärfunktionen (38) vorhanden ist.

8. Fahrzeug gemäss Anspruch 7, **dadurch gekennzeichnet, dass** das Modul (3) für Sekundärfunktionen (38) einen Touchscreen (31) und/oder mindestens einen Taster (311) umfasst.

9. Fahrzeug gemäss Anspruch 7 oder 8, **dadurch gekennzeichnet, dass** das Modul (3) für Sekundärfunktionen (38) mit mindestens einem Hauptkontrollerboard (331) verbunden ist.

10. Fahrzeug gemäss einem der Ansprüche 1 bis 9, **dadurch gekennzeichnet, dass** ein Force-Feedback-System vorhanden ist, welches die Kraft der Räder zurück zum Bedienelement (12) des Lenkeingabemoduls (11) überträgt und die Kraft ebenfalls in dem oder den Hauptkontrollerboards (131a,b, 231a,b) einstellbar ist.

11. Fahrzeug gemäss einem der Ansprüche 1 bis 10, **dadurch gekennzeichnet, dass** der Lenkaktuatur (142a,b) auf eine im Fahrzeug bestehende Lenksäule einwirkt und der Bremsaktuator (242a,b) ein im Fahrzeug bestehendes Bremspedal.

12. Fahrzeug gemäss einem der Ansprüche 1 bis 11, **dadurch gekennzeichnet, dass** zwischen dem Lenkeingabemodul (11) und mehreren Lenkaktuatoren (142a,b) und zwischen Bremseingabemodul (21) und mehreren Bremsaktuatoren (242a,b) mindestens ein Umrichtermodule (13a,b, 23a,b) mit dem Hauptkontrollerboard (131a,b, 231a,b) und einem Umrichter (132a,b, 232a,b) vorhanden sind.

13. Fahrzeug gemäss einem der Ansprüche 1 bis 12, **dadurch gekennzeichnet, dass** zwischen dem Lenkeingabemodul (11) und mehreren Lenkaktuatoren (142a,b) und zwischen Bremseingabemodul (21) und mehreren Bremsaktuatoren (242a,b) redundante geführte Umrichtermodule (13a,b, 23a,b) mit jeweils einem Hauptkontrollerboard (131a,b, 231a,b) und einem Umrichter (132a,b, 232a,b) vorhanden sind.

14. Fahrzeug gemäss einem der Ansprüche 1 bis 13, **dadurch gekennzeichnet, dass** zwischen dem Lenkeingabemodul (11) und mehreren Lenkaktuatoren (142a,b) und zwischen Bremseingabemodul (21) und mehreren Bremsaktuatoren (242a,b) redundante geführte Hauptkontrollerboards (131a,b, 231a,b) vorhanden sind und im Fehlerfall die Hauptkontrollerboards (131a,b, 231a,b) den Fehler erkennen und den fehlerhaften Strang abschalten können, so dass immer mindestens ein Lenk- und Bremsaktuator (142a,b, 242a,b) funktionsfähig bleibt.

15. Fahrzeug gemäss einem der Ansprüche 1 bis 14, **dadurch gekennzeichnet, dass** die Wegübersetzung von dem Bedienelement (12) zum Lenken des Fahrzeugs zur Lenksäule und/oder die Bremsdruckregelung geschwindigkeitsabhängig ist.

16. Fahrzeug gemäss einem der Ansprüche 1 bis 15, **dadurch gekennzeichnet, dass** zwischen dem Lenk- und Bremseingabemodul (11, 21) und dem Lenk- und Bremsaktuator (142a,b, 242a,b) nur eine elektrische oder elektronische Verbindung vorhanden ist.

17. Fahrzeug gemäss einem der Ansprüche 1 bis 16, **dadurch gekennzeichnet, dass** ein Energiemodul (32) mit einem Hauptkontrollerboard (321) zur Überwachung der Energieversorgung des Systems vorhanden ist.

18. Fahrzeug gemäss einem der Ansprüche 1 bis 17, **dadurch gekennzeichnet, dass** die Energieversorgung des Systems durch ein Fahrzeugbordnetz geschieht, wobei die Energieversorgung bei Ausfall des Bordnetzes durch eine zusätzliche Batterie (322) sichergestellt ist.

19. Fahrzeug gemäss einem der Ansprüche 1 bis 18, **dadurch gekennzeichnet, dass** mehrere Hauptkontrollerboards (131a,b, 231a,b 321, 331) vorhanden sind, die über einen Kommunikationsbus (43) miteinander verbunden sind.

20. Fahrzeug gemäss einem der Ansprüche 1 bis 19, **dadurch gekennzeichnet, dass** das oder die Hauptkontrollerboards (131a,b, 231a,b, 321, 331) zur Konfigurierung mit einem externen Computer (41) verbindbar sind.

21. Fahrzeug gemäss einem der Ansprüche 1 bis 20, **dadurch gekennzeichnet, dass** ein Modulträger (50) vorhanden ist, auf dem die Module (11, 21, 13, 23, 32, 33) befestigt werden.

22. Fahrzeug gemäss einem der Ansprüche 1 bis 21, **dadurch gekennzeichnet, dass** ein Schwenkarm (52) vorhanden ist, der als Trägerelement zur Befestigung der Eingabemodule (11, 21) dient, welcher Schwenkarm (52) durch einfache Manipulation des Fahrers demontierbar ist und das Gesamtsteuersystem automatisch einschaltet, wenn er sich in einer Fahrerposition befindet.

23. Fahrzeug gemäss einem der Ansprüche 1 bis 22, **dadurch gekennzeichnet, dass** das Lenkeingabe- und/oder Bremseingabemodul (11, 21) nachträglich in das Fahrzeug einbaubar sind.

24. Fahrzeug gemäss einem der Ansprüche 1 bis 23, **dadurch gekennzeichnet, dass** die Bedienung des Fahrzeugs über ein bestehendes Lenkrad und vorhandene Gas- und Bremspedale (25) weiter möglich ist.

25. Verfahren zur Ausrüstung eines Fahrzeugs mit einem Steuerungssystem gemäss einem der Ansprüche 1 bis 24, **dadurch gekennzeichnet, dass** ein Lenkeingabemodul (11) mit Bedienelement (12), ein Hauptkontrollerboard (131) und Lenkaktuator (141) und/oder Bremseingabemodul (21) mit Bedienelement (22), ein Hauptkontrollerboard (231) und Bremsaktuator (242) nachträglich in das Fahrzeug eingebaut werden.

26. Verfahren zur Konfigurierung eines Fahrzeugs gemäss einem der Ansprüche 1 bis 24, **dadurch gekennzeichnet, dass** der oder die Hauptkontrollerboards (131a,b, 231a,b, 321, 331) über eine Schnittstelle (42) mit einem externen Computer (41) verbunden und konfiguriert werden, um die Einstellung der individuellen Parameter betreffend Lenkwinkel und Geradeausstellung in Bezug auf ein bestimmtes der verschiedenen austauschbaren Bedienelemente (12) zum Lenken des Fahrzeugs und/oder um die Einstellung der individuellen Parameter betreffend Bremsweg auf ein bestimmtes der austauschbaren Bedienelemente (22) zum Bremsen vorzunehmen.

27. Computer programm produkt mit einem Softwarecode, der geeignet ist, auf einem Computer abzulaufen, um das Verfahren gemäss Anspruch 25 durchzuführen, um in dem oder den Hauptkontrollerboards (131a,b, 231a,b, 321, 331) die Einstellung der Individuellen Parameter betreffend Lenkwinkel und Geradeausstellung in Bezug auf ein bestimmtes der austauschbaren Bedienelemente (12) zum Lenken des Fahrzeugs und/oder um die Einstellung der individuellen Parameter betreffend Bremsweg in Bezug auf ein bestimmtes der verschiedenen austauschbaren Bedienelemente (22) zum Bremsen vorzunehmen.

## Claims

1. Vehicle with a steering comprising:
• a steering input module (11) having a mechanical interface to which different exchangeable operating elements (12) for steering the vehicle can be attached and having at least one sensor (111 a,b) in order to detect the movement of the operating element (12), wherein the steering input module (11) is connected with at least one steering actuator (142a,b) for executing the steering wish to the vehicle; and/or
• a brake input module (21) comprising a mechanical interface having touchless sensors (211a,b), to which different exchangeable operating elements (22) for braking can be attached and having at least one brake actuator (242a,b) for executing the braking wish to the vehicle; **characterized in that**
• wherein per steering input module (11) and/or brake input module (21) at least one main controller board (131a,b, 321a,b) is provided in order to set the individual parameters with respect to the steering angle and straight-ahead position of a specific exchangeable operating element (12) for steering the vehicle and in order to set the individual parameters with respect to the brake distance of a specific exchangeable operating element (22) for braking.

2. Vehicle according to claim 1, **characterized in that** as exchangeable operating elements (12) for steering the vehicle, one or several joysticks (121), a motorbike handlebar (122), a footplate (123), a mini steering wheel (124) or a knee lever steering can be used.

3. Vehicle according to one of the claims 1 or 2, **characterized in that** a joystick (121) is provided and the rotation axis lies in the middle of the joystick (121).

4. Vehicle according to one of the claims 1 to 3, **characterized in that** as exchangeable operating elements (12) two joysticks (121) are provided that are connected through an arrangement of levers (125), wherein a joystick (121) is connected with the steering input module (11).

5. Vehicle according to one of the claims 1 to 4, **characterized in that** as operating elements (22) for braking, a gas/brake locking drawer (221) or a tilt lever/rocker arm (222) is provided.

6. Vehicle according to one of the claims 1 to 5, **characterized in that** the steering input module (11) and the brake input module (21) are provided in a single module.

7. Vehicle according to one of the claims 1 to 6, **characterized in that** a module (3) for secondary functions (38) is provided.

8. Vehicle according to claim 7, **characterized in that** the module (3) for secondary functions (38) comprises a touch screen (31) and/or at least one pushbutton (311).

9. Vehicle according to claim 7 or 8, **characterized in that** the module (3) for secondary functions (38) is connected with at least one main controller board (331).

10. Vehicle according to one of the claims 1 to 9, **characterized in that** a force feedback system is provided that transmits the force of the wheels back to the operating element (12) of the steering input module (11) and the force can be adjusted also in the main controller board or boards (131a,b, 231a,b).

11. Vehicle according to one of the claims 1 to 10, **characterized in that** the steering actuator (142a,b) acts on an existing steering column in the vehicle and the brake actuator (242a,b) on an existing brake pedal in the vehicle.

12. Vehicle according to one of the claims 1 to 11, **characterized in that** between the steering input module (11) and several steering actuators (142a,b) and between the brake input module (21) and several brake actuators (242a,b) there is at least one converter module (13a,b, 23a,b) with the main controller board (131 a,b, 231 a,b) and a converter (132a,b, 232a,b).

13. Vehicle according to one of the claims 1 to 12, **characterized in that** between the steering input module (11) and several steering actuators (142a,b) and between the brake input module (21) and several brake actuators (242a,b) redundant converter modules (13a,b, 23a,b) with each a main controller board (131 a,b, 231 a,b) and a converter (132a,b, 232a,b) are provided.

14. Vehicle according to one of the claims 1 to 13, **characterized in that** between the steering input module (11) and several steering actuators (142a,b) and between the brake input module (21) and several brake actuators (242a,b) hot-spare/failover converter modules (13a,b, 23a,b) with each a main controller board (131 a,b, 231 a,b) and a converter (132a,b, 232a,b) are provided and in case of an error the main controller boards (131a,b, 231a,b) are capable of detecting the error and switching off the faulty strand, so that at least one steering and brake actuator (142a,b, 242a,b) always remains operational.

15. Vehicle according to one of the claims 1 to 14, **characterized in that** the path transmission from the operating element (12) for steering the vehicle to the steering column and/or the brake pressure control is speed-dependent.

16. Vehicle according to one of the claims 1 to 15, **characterized in that** between the steering and brake input module (11, 21) and the steering and brake actuator (142a,b, 242a,b) only an electric or electronic connection is provided.

17. Vehicle according to one of the claims 1 to 16, **characterized in that** an energy module (32) with a main controller board (321) for monitoring the energy supply of the system is provided.

18. Vehicle according to one of the claims 1 to 17, **characterized in that** the energy supply of the system is ensured through a vehicle on-board network, wherein, in case of failure of the on-board network, the energy supply is guaranteed through an additional battery (322).

19. Vehicle according to one of the claims 1 to 18, **characterized in that** several main controller boards (131a,b, 231a,b, 321, 331) are provided that are connected to one another over a communication bus (43).

20. Vehicle according to one of the claims 1 to 19, **characterized in that** the main controller board or boards (131a,b, 231a,b, 321, 331) can be connected with an external computer (41) for the purpose of configuration.

21. Vehicle according to one of the claims 1 to 20, **characterized in that** a module carrier (50) is provided on which the modules (11, 21, 13, 23, 32, 33) are attached.

22. Vehicle according to one of the claims 1 to 21, **characterized in that** a swivel arm (52) is provided to serve as carrier element for attaching the input modules (11, 21), said swivel arm (52) being easily removable through a simple manipulation of the driver and automatically switching on the overall control system when it is in a driver's position.

23. Vehicle according to one of the claims 1 to 22, **characterized in that** the steering input and/or brake input module (11, 21) can be subsequently retrofitted with the vehicle.

24. Vehicle according to one of the claims 1 to 23, **characterized in that** operating the vehicle through an existing steering wheel and existing gas and brake pedals (25) remains possible.

25. Method for fitting a vehicle with a control system according to one of the claims 1 to 24, **characterized in that** a steering input module (11) with operating element (12), a main controller board (131) and steering actuator (142) and/or brake input module (21) with operating element (22), a main controller board (231) and brake actuator (242) can be subsequently retrofitted with the vehicle.

26. Method for configuring a vehicle according to one of the claims 1 to 24, **characterized in that** the main controller board or boards (131a,b, 231a,b, 321, 331) can be connected through an interface (42) with an external computer (41) for the purpose of configuration in order to set the individual parameters with respect to the steering angle and straight-ahead position of some of the different exchangeable operating elements (12) for steering the vehicle and/or in order to set the individual parameters with respect to the brake distance of some of the exchangeable operating elements (22) for braking.

27. Computer program product with a software code that is capable of running on a computer in order to execute the method according to claim 25, in order to set in the main controller board or boards (131a,b, 231a,b, 321, 331) the individual parameters with respect to the steering angle and straight-ahead position of some of the different exchangeable operating elements (12) for steering the vehicle and/or in order to set the individual parameters with respect to the brake distance of some of the exchangeable operating elements (22) for braking.

## Revendications

1. Véhicule équipé d'une commande, comprenant :
• un module d'entrée de direction (11) équipé d'une interface mécanique, sur laquelle peuvent être installés différents éléments de commande remplaçables (12) pour diriger le véhicule et au moins un capteur (11 a,b) pour détecter le mouvement d'un élément de commande (12), selon lequel le module d'entrée de direction (11) est connecté avec au moins un guidon (142a,b) pour exécuter le souhait de commande au véhicule ; et/ou
• un module d'entrée de freinage (21) équipé d'une interface mécanique dotée de capteurs sans contacts (211 a,b), sur laquelle peuvent être installés différents éléments de commande remplaçables (22) pour procéder au freinage et au moins un frein (242a,b) pour exécuter le souhait de freinage au véhicule ; **caractérisé en ce que**
• au moins une carte contrôleur principale (131a,b, 321 a,b) est disponible par module d'entrée de direction (11) et/ou par module d'entrée de freinage (21) pour procéder au réglage des paramètres individuels concernant l'angle de direction et la position en ligne droite d'un des éléments de commande remplaçables particuliers (12) pour diriger le véhicule et/ou au réglage des paramètres individuels concernant la distance de freinage d'un des éléments de commande remplaçables particuliers (22) pour freiner.

2. Véhicule selon la revendication 1, **caractérisé en ce que** pour les éléments de commande remplaçables (12) pour diriger le véhicule une ou plusieurs manettes (121), un guidon de motocycle (122), une planche pour les pieds (123), un mini-guidon (124) ou un levier de direction actionné par le genou peuvent être utilisés.

3. Véhicule selon l'une des revendications 1 ou 2, **caractérisé en ce qu'**il dispose d'une manette (121) et que l'axe de rotation est situé dans le milieu de la manette (121).

4. Véhicule selon l'une des revendications 1 à 3, **caractérisé en ce qu'**il dispose comme éléments de commande remplaçables (12) de deux manettes (121) qui sont connectées par une tige (125), selon lequel une manette (121) est connectée au module d'entrée de direction (11).

5. Véhicule selon l'une des revendications 1 à 4, **caractérisé en ce qu'**il dispose comme éléments de commande (22) pour freiner d'un tiroir d'accélération / de freinage (221) ou d'un manche à bascule / interrupteur (222).

6. Véhicule selon l'une des revendications 1 à 5, **caractérisé en ce que** le module d'entrée de direction (11) et le module d'entrée de freinage (21) consistent en un seul module.

7. Véhicule selon l'une des revendications 1 à 6, **caractérisé en ce qu'**il présente un module (3) pour des fonctions secondaires (38).

8. Véhicule selon la revendication 7, **caractérisé en ce que** le module (3) pour les fonctions secondaires (38) comprend un écran tactile (31) et/ou au moins un bouton-poussoir (311).

9. Véhicule selon la revendication 7 ou 8, **caractérisé en ce que** le module (3) pour les fonctions secondaires (38) est connecté avec au moins une carte contrôleur principale (331).

10. Véhicule selon l'une des revendications 1 à 9, **caractérisé en ce qu'**il présente un module de retour de force qui renvoie la force des roues aux éléments de commande (12) du module d'entrée de direction (11) et que la force peut également être réglée dans la ou les cartes contrôleur principales (131a,b, 231 a,b).

11. Véhicule selon l'une des revendications 1 à 10, **caractérisé en ce que** le guidon (142a,b) agit sur une colonne de direction existante dans le véhicule et que le frein (242a,b) agit sur une pédale de frein existante dans le véhicule.

12. Véhicule selon l'une des revendications 1 à 11, **caractérisé en ce qu'**entre le module d'entrée de direction (11) et différents leviers de commande (142a,b) et entre le module d'entrée de freinage (21) et différents leviers de freinage (242a,b), il existe au moins un module de conversion (13a,b, 23a,b) avec la carte contrôleur principale (131a,b, 231 a,b) et un convertisseur (132a,b, 232a,b).

13. Véhicule selon l'une des revendications 1 à 12, **caractérisé en ce qu'**entre le module d'entrée de direction (11) et différents leviers de commande (142a,b) et entre le module d'entrée de freinage (21) et différents leviers de freinage (242a,b), il existe des modules de conversion redondants (13a,b, 23a,b) pour chacun des cartes contrôleur principales (131a,b, 231a,b) et convertisseur (1 32a,b, 232a,b).

14. Véhicule selon l'une des revendications 1 à 13, **caractérisé en ce qu'**entre le module d'entrée de direction (11) et différents leviers de commande (142a,b) et entre le module d'entrée de freinage (21) et différents leviers de freinage (242a,b), il existe des modules de conversion redondants (13a,b, 23a,b) pour chacun des cartes contrôleur principales (131a,b, 231a,b) et convertisseur (132a,b, 232a,b), et qu'en cas d'erreur les cartes contrôleur principales (131a,b, 231 a,b) sont capables de détecter l'erreur et de déconnecter la ligne erronée, de manière à ce qu'au moins un levier de commande et de freinage (142a,b, 242a,b) reste toujours opérationnel.

15. Véhicule selon l'une des revendications 1 à 14, **caractérisé en ce que** la transmission de la direction par l'élément de commande (12) pour diriger le véhicule à la colonne de direction et/ou à la régulation de la pression du frein dépend de la vitesse.

16. Véhicule selon l'une des revendications 1 à 15, **caractérisé en ce qu'**entre le module d'entrée de direction ou de freinage (11, 21) et le levier de commande ou de freinage (142a,b, 242a,b) il existe une seule connexion électrique ou électronique.

17. Véhicule selon l'une des revendications 1 à 16, **caractérisé en ce qu'**il existe un module d'énergie (32) avec une carte contrôleur principale (321) pour contrôler l'approvisionnement en énergie du système.

18. Véhicule selon l'une des revendications 1 à 17, **caractérisé en ce que** l'approvisionnement en énergie du système se fait par un circuit de bord de véhicule , selon lequel, en cas de défaillance du circuit de bord du véhicule, l'approvisionnement en énergie est assuré par une batterie supplémentaire (322).

19. Véhicule selon l'une des revendications 1 à 18, **caractérisé en ce qu'**il existe plusieurs cartes contrôleur principales (131a,b, 231a,b, 321, 331) qui sont reliées entre elles par un bus de communication (43).

20. Véhicule selon l'une des revendications 1 à 19, **caractérisé en ce que** la ou les cartes contrôleur principales (131a,b, 231a,b, 321, 331) peuvent être reliées à un ordinateur externe (41) pour êtres configurées.

21. Véhicule selon l'une des revendications 1 à 20, **caractérisé en ce qu'**il existe un porte-module (50) sur lequel les modules (11, 21, 13, 23, 32, 33) sont attachés.

22. Véhicule selon l'une des revendications 1 à 21, **caractérisé en ce qu'**il existe un bras pivotant (52) qui sert d'élément de support pour y attacher les modules d'entrée (11, 21), ledit bras pivotant (52) pouvant être facilement détaché par une manipulation simple du conducteur et qui enclenche automatiquement le système de commande global lorsqu'il est mis dans une position du conducteur.

23. Véhicule selon l'une des revendications 1 à 22, **caractérisé en ce que** le module d'entrée de direction et/ou de freinage (11, 21) peut être installé dans le véhicule à postériori.

24. Véhicule selon l'une des revendications 1 à 23, **caractérisé en ce que** la commande du véhicule avec le guidon et les pédales d'accélération et de frein existants (25) reste possible.

25. Méthode pour équiper un véhicule avec un système de commande selon l'une des revendications 1 à 24, **caractérisée en ce qu'**un module d'entrée de direction (11) avec des éléments de commande (12), une carte contrôleur principale (131) et un guidon (142) et/ou un module d'entrée de freinage (21) avec des éléments de commande (22), une carte contrôleur principale (231) et un frein (242) peuvent être installés dans le véhicule à postériori.

26. Méthode pour configurer un véhicule selon l'une des revendications 1 à 24, **caractérisée en ce que** la ou les cartes contrôleur principales (131a,b, 231a,b, 321, 331) peuvent être reliées au moyen d'une interface (42) à un ordinateur externe (41) pour être configurées, afin de procéder au réglage des paramètres individuels concernant l'angle de direction et la position en ligne droite d'un des différents éléments de commande remplaçables particuliers (12) pour diriger le véhicule et/ou au réglage des paramètres individuels concernant la distance de freinage d'un des éléments de commande remplaçables particuliers (22) pour freiner.

27. Produit de programme d'ordinateur avec un code de logiciel qui peut être lancé sur un ordinateur de manière à exécuter la méthode selon la revendication 25, afin de procéder au réglage dans la ou les cartes contrôleur principales (131a,b, 231a,b, 321, 331) des paramètres individuels concernant l'angle de direction et la position en ligne droite d'un des différents éléments de commande remplaçables particuliers (12) pour diriger le véhicule et/ou au réglage des paramètres individuels concernant la distance de freinage en relation avec l'un des éléments de commande remplaçables particuliers (22) pour freiner.
